# EUROPEAN PATENT SPECIFICATION

(11) **EP 1 383 184 B1**
(45) Date of publication and mention of the grant of the patent: **08.03.2017**
(21) Application number: 02720565.7
(22) Date of filing: 22.04.2002
(51) Int. Cl.: H01M 8/1004, H01M 8/04291, H01M 4/86, H01M 4/88

(54) **ELECTRODE FOR FUEL CELL AND METHOD OF MANUFACTURING THE ELECTRODE**
ELEKTRODE FÜR BRENNSTOFFZELLE UND HERSTELLUNGSVERFAHREN DAFÜR
ELECTRODE POUR PILE A COMBUSTIBLE ET PROCEDE DE FABRICATION DE L'ELECTRODE

(30) Priority: 27.04.2001 JP 2001132972; 03.07.2001 JP 2001202286
(43) Date of publication of application: 21.01.2004
(73) Proprietor: Panasonic Intellectual Property Management Co., Ltd., Osaka-shi, Osaka 540-6207 (JP)
(72) Inventor: SAKAI, Osamu, Neyagawa-shi, Osaka 572-0055 (JP); NIIKURA, Junji, Hirakata-shi, Osaka 573-0157 (JP); KANBARA, Teruhisa, Toyonaka-shi, Osaka 560-0056 (JP); YAMAMOTO, Masao, Kishiwada-shi, Osaka 596-0825 (JP); YOSHIDA, Akihiko, Hirakata-shi, Osaka 573-0165 (JP); UCHIDA, Makoto, Hirakata-shi, Osaka 573-1145 (JP); YASUMOTO, Eiichi, Seikacho, Soraku-gun, Kyoto 619-0238 (JP); MORITA, Junji, Moriguchi-shi, Osaka 570-0031 (JP); SUGAWARA, Yasushi, Higashiosaka-shi, Osaka 577-0056 (JP)
(74) Representative: Leinweber & Zimmermann
(86) International application number: PCT/JP2002/004006
(87) International publication number: WO 2002/091503

(56) References cited:
- EP-A1- 1 050 915
- WO-A-99/66578
- JP-A- 6 203 851
- JP-A- 7 230 811
- JP-A- 7 282 814
- JP-A- 7 296 818
- JP-A- 10 055 806
- JP-A- 62 024 565
- JP-A- 2000 133 279
- US-A- 5 211 984

## Description

### Technical Field

The present invention relates to a method of making a fuel cell directly using, as a fuel, pure hydrogen, a reformed hydrogen from methanol or a fossil fuel, or a liquid fuel such as methanol, ethanol and dimethyl ether, and using air or oxygen as an oxidant, more particularly relates to a method of making an electrode for a fuel cell using a solid polymer as an electrolyte.

### Background Art

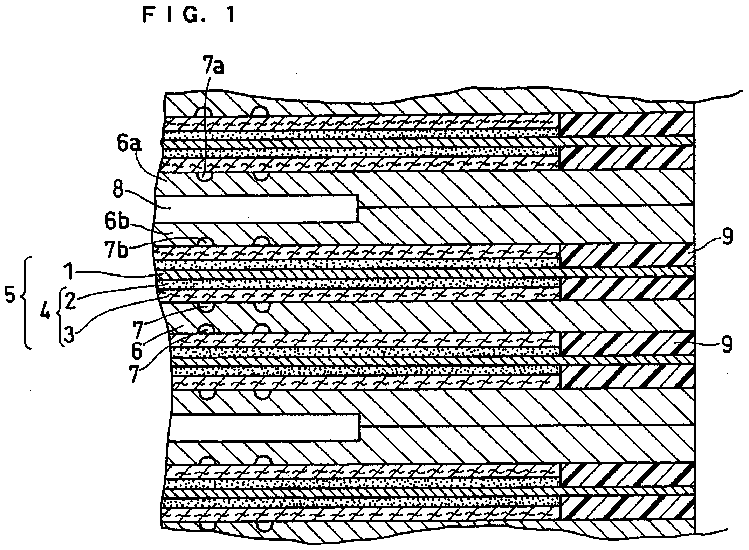

In a polymer electrolyte fuel cell, a fuel gas such as hydrogen is electrochemically reacted with an oxidant gas such as air by gas diffusion electrodes each having a catalyst layer provided with a catalyst such as platinum, whereby electricity and heat are simultaneously generated. A general structure of such polymer electrolyte fuel cell is shown in FIG. 1.

Referring to FIG. 1, catalyst layers 2 each having, as a main ingredient, carbon powder carrying a platinum group metal catalyst are arranged in intimate contact with both surfaces of a polymer electrolyte membrane 1 which selectively transports hydrogen ions. A pair of gas diffusion layers 3 having both gas permeability and electric conductivity are respectively arranged in intimate contact with the outer surfaces of the catalyst layers. The gas diffusion layers 3 and the catalyst layers 2 constitute electrodes 4. Electrically conductive separator plates 6 for mechanically fixing an electrolyte membrane-electrode assembly (MEA) formed by the electrode 4 and the polymer electrolyte membrane 1 and for electrically connecting neighboring MEAs in series are arranged on outside surfaces of the electrodes 4. The separator plate 6 has, on a surface thereof to contact the electrode 4, a gas flow channel 7 for supplying a reactive gas to the electrode and for carrying away water generated by the reaction and excessive gas. The gas flow channels can be provided independently of the separator plates, but it is a general manner to provide grooves, as the gas flow channel, on the surface of the separator plate. In the case of the example shown in the drawing, a combination of a separator plate 6a having gas flow channel 7a for supplying a fuel gas to the anode and of a separator plate 6b having gas flow channel 7b for supplying an oxidant gas to the cathode constitutes flow channel 8 for a cooling water. Reference numeral 9 designates a gasket arranged at a peripheral portion of the electrode.

In many fuel cells, stack structure is employed, in which a large number of unit cells each having a structure as above described are stacked. According to such polymer electrolyte fuel cell stack as described above, the cell as a whole needs to be constantly tightened in order to reduce the electric contact resistances of the constituting components such as separator plates, and to maintain sealing property as to the fuel gas and the oxidant gas. For this purpose, end plates are respectively arranged on both ends of the structure having the large number of unit cells stacked in one direction, and the both end plates are fixed with each other by tightening elements so as to provide a tightening pressure.

The gas diffusion layer in an electrode of such polymer electrolyte fuel cell mainly has the following three functions. The first one is a function to diffuse reactive gases for uniformly supplying the reactive gases of e.g. the fuel gas and the oxidant gas to the catalyst in the catalyst layer from the gas flow channels provided at further outer surfaces of the gas diffusion layer. The second one is a function to immediately exhaust, to the gas flow channels, water generated at the catalyst layer by the reaction. The third one is a function to conduct electrons, which are needed for or generated by the reaction. Therefore, correspondingly high permeability performances for the reactive gases and water vapor as well as a high electronic conductivity are needed therein. According to conventionally general art, it has been attempted to respectively realize: the gas permeability performance by allowing the gas diffusion layer to have a porous structure; the water vapor permeability performance by diffusing, in the layer thereof, e.g. a water repellent polymer as represented by a fluorocarbon resin; and the electronic conductivity by structuring the gas diffusion layer by an electronically conductive material such as carbon fiber, metal fiber and fine carbon powder.

Various attempts for improving above described gas permeability performance, water vapor permeability performance and electronic conductivity cause effects contradictory to each other. For example, an increase of the porosity in the gas diffusion layer by e.g. decreasing the diameter and the amount of carbon fibers for the purpose of improving the gas permeability performance causes the electronic conductivity to get lowered. Further, an addition of water repellent polymer for the purpose of improving the water permeability performance causes the gas permeability performance and the electronic conductivity to get lowered. Thus, various attempts have been made to successfully realize above contradictory functions by e.g. combining a layer formed by a carbon fiber with a layer formed by a fine carbon powder and a water repellent polymer, rather than by a single structure of the gas diffusion layer. However, there have been few examples, which specifically determine various properties for above described water repellent polymer to have as the gas diffusion layer.

For example, most representative examples of methods of using water repellent polymers, as generally known, are: a method of subjecting a carbon paper or carbon cloth to an immersing process in a dispersion of polytetrafluoroethylene (referred to as PTFE hereafter) as disclosed in e.g. Japanese Laid-open Patent Publication Hei 6-203851; and a method of forming a layer of a fine carbon powder having PTFE added thereto. Further, according to a generally employed method, after a layer of fine carbon powder having PTFE added thereto is formed, it is subjected to a heat treatment at a temperature of the melting point or above of the water repellent material and of a boiling point or above of a surfactant.

However, the carbon paper and the carbon cloth have, at their surfaces, needle-like convex-concave portions due to the carbon fiber. Accordingly, when the carbon paper or the carbon cloth is directly contacted with the catalyst layer, pinholes are generated at the polymer electrolyte membrane, which cause internal short-circuiting. For this reason, it is necessary to form a water repellent layer between the carbon paper or carbon cloth and the catalyst layer. Here, if the electrode is subjected to a heat treatment at a temperature of the melting point or above of the water repellent material for improving the water repelling effect of the water repellent material, the electrode suffers a problem of exfoliation thereof due to the decrease of bonding strength thereof. This brings about a consequence of a decrease of discharge performance and of an increase of man-hours due to a decrease of handleability in cell assembling.

The polymer electrolyte membrane of the polymer electrolyte fuel cell has such physical properties that its ionic conductivity increases as the water content therein increases. Accordingly, it is necessary to keep the polymer electrolyte membrane and the polymer electrolyte in the catalyst layer at a wet condition. However, if it becomes an excessively wet condition, the porous portions in the gas diffusion layer and the gas flow channels of the separator plates are blocked by condensed water, resulting in a flooding state, in which the cell performance extremely deteriorates due to the impairment of the gas diffusion. In order to provide a high performance polymer electrolyte fuel cell, it is indispensable to keep the polymer electrolyte at an appropriately wet condition and to eliminate excessive water safely and immediately.

Usually, it is difficult to keep the appropriately wet condition by only water generated during the cell operation, so that one or another method of humidification is generally used for supplying a reactive gas and water content to an MEA to humidify the MEA. When the amount of humidification decreases, a problem arises in that the output voltage remarkably degrades. However, as the method of humidification is simpler and as the amount of humidification gets smaller, the humidification and the cell operation can be more stable and safer, which enables an improvement of the operational efficiency of a fuel cell system.

The present invention is to solve above described problems of prior art by optimizing the water repellent material in a gas diffusion layer.

The object of the present invention is to provide a method of making an electrode which can provide a fuel cell having no problem of electrode exfoliation at a manufacturing process and having a high discharge performance.

JP-A-7/296,818, EP-A-1 050 915, JP-A-2000/133,279, WO-A-99/66578 & EP-A-1 096 587, JP-A-6,203,851, JP-A-7,282,814, JP-A-62-024,565, JP-A-10/055 806, US-A-5211984 are related to fuel cells comprising an electrode having a gas diffusion layer and a catalyst layer.

JP-A-7,230,811 discloses a method of making an electrode for a fuel cell.

### Disclosure of Invention

The present invention provides a method of making an electrode for a fuel cell, which electrode comprises a gas diffusion layer and a catalyst layer formed on a surface thereof to contact a polymer electrolyte membrane, comprising a step of adding to the gas diffusion layer a water repellent material which can be fibrillated, and a step of subjecting the same to a heat treatment at a temperature of the melting point or below of the water repellent material.

It is provided that above described water repellent material be polytetrafluoroethylene having a molecular weight higher than 1 million, and that above described heat treatment temperature be in a range from 270°C to 330°C.

### Brief Description of Drawings

FIG. 1 is a cross-sectional view showing a structure of a general polymer electrolyte fuel cell.
FIG. 2 is a simplified diagram schematically showing a water repellent material according to the present invention.
FIG. 3 is a simplified diagram schematically showing a conventional water repellent material.
FIG. 4 is a graph showing comparison among current-voltage characteristics of hydrogen-air fuel cells.
FIG. 5 is a graph showing comparison among current-voltage characteristics of liquid fuel cells.
FIG. 6 is graph showing current-voltage characteristics of a fuel cell according to Example 3 and those of a fuel cell according Comparative Example 5.
FIG. 7 is a graph showing current-voltage characteristics of fuel cells according to Example 4.
FIG. 8 is graph showing current-voltage characteristics of a fuel cell according to Example 3 and those of a fuel cell according to Comparative Example 6.

### Best Mode for Carrying Out the Invention

An electrode for a fuel cell made with a method according to the present invention is characterized in that a gas diffusion layer contains a water repellent material which can be fibrillated. By the fibrillation of a water repellent polymer of the water repellent material, the bonding strength of the water repellent material to the gas diffusion layer increases, so that the ionic conductivity increases, and that the area where to retain water decreases, resulting in an electrode which is strong against flooding. Thus, the discharge performance and the productivity increase.

A water repellent polymer to be used here is a polytetrafluoroethylene (PTFE) having a molecular weight higher than 1 million. The melting point of PTFE is 327°C to 347°C. The PTFE is a generally widely used water repellent material. It is a water repellent material which can be reduced in its cost and can be easily fibrillated, so that an electrode showing a high bonding strength can be easily obtained.

The temperature at which the electrode having a water repellent material added thereto is to be subjected to heat treatment is to be lower than the melting point of the water repellent material, preferably such temperature at which fibrillated portions do not get softened to be burned off. A heat treatment temperature is 270°C to 330°C.

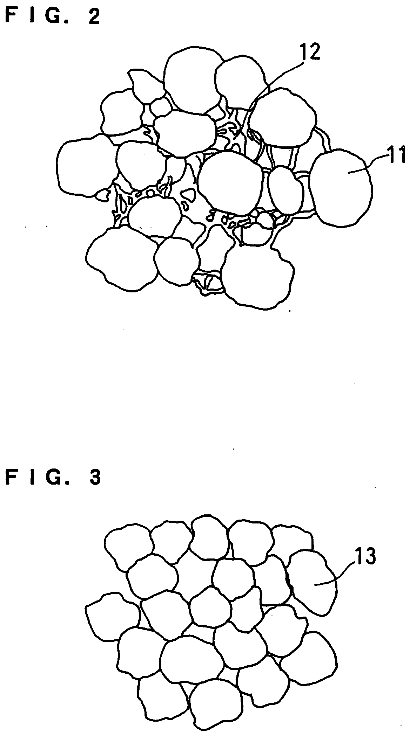

FIG. 2 schematically shows primary particles of a water repellent material to be used for the present invention. The polymer used for the water repellent material according to the present invention can be easily fibrillated, and generates portions 12 where it is fibrillated in a web form, which portions cover primary particles 11. The fibrillation is further promoted to increase the fibrillated portions 12, when a shear force is further imposed, in making the electrode, on the particles by e.g. stirring during the process of making an electrode ink and mechanical resistance at an ink transportation path during the process of ink coating. By use of the fibrillated portions 12, the electrode can be heightened in its bonding strength. Consequently, the discharge performance of the electrode is improved, and man-hours for the manufacturing process can be reduced.

As shown in FIG. 3, on the other hand, particles 13 of conventional water repellent materials have short molecular chains and do not have sufficient molecular weights, so that fibrillation is hardly generated even with an imposition of a shear force thereon, and the fibrillated portions do not increase. Further, when these water repellent materials are subjected to heat treatment at temperatures of the melting points thereof or above, portions 12 having been fibrillated in a web form get softened and re-agglomerate, so that the web-form fibrillated portions 12 undesirably decrease.

By using the gas diffusion layer according to the present invention, a high performance and inexpensive electrode for a fuel cell can be made.

According to a further object of the present invention, from a different aspect, is to provide a polymer electrolyte fuel cell which does not deteriorate in its performance even by a small amount of humidification.

In order to achieve this object, the method of the present invention can further provide an electrode for a fuel cell, in which electrically conductive particles having water repellency are distributed substantially throughout the whole region of the gas diffusion layer.

Here, a porous electrode base material to constitute the gas diffusion layer is made of a carbon material such as carbon paper, carbon felt and carbon cloth.

The electrically conductive particles are preferred to be carbon particles containing PTFE.

The electrically conductive particles are not localized in the vicinity of one surface of the electrode base material by coating the same on the surface of the porous electrode base material such as carbon paper, which surface is to be in contact with the catalyst layer. Rather, the electrically conductive particles are distributed throughout the porous electrode base material by e.g. impregnation or pressure-filling. With respect to the porous electrode base material having such electrically conductive particles with water repellency arranged throughout substantially the whole region thereof, it is also effective to coat further electrically conductive particles with water repellency or the like on a main surface of the porous electrode base material, which surface is to be in contact with the catalyst layer.

When a gas diffusion electrode is made by such conventional mode that electrically conductive particles with water repellency are coated by blade coating or spray coating on a porous electrode base material in the vicinity of a surface thereof, such gas diffusion electrode does not have a sufficient property to retain wet condition in MEA of a polymer electrolyte fuel cell. When a cell is operated while it is humidified from outside, the cell voltage remarkably decreases if the amount of the humidification is decreased.

In view of such problems, more suitable wet condition of the polymer electrolyte is to be realized according to the present invention by distributing electrically conductive particles having water repellency throughout substantially the whole region of the porous electrode base material, namely gas diffusion layer. Thereby, such gas diffusion layer can be provided that has a sufficient thickness, a superior performance of retaining wet condition in the polymer electrolyte, electric conductivity and water repellency.

In order to achieve an object to enable a smaller amount of humidification, one general method is to preliminarily subject a porous electrode base material to a water repellency treatment by using e.g. a dispersion of fluorocarbon resin. However, according to comparative studies, it has been found that the gas diffusion electrode according to the present invention has a higher capability of retaining wet condition. Furthermore, the gas diffusion electrode according to the present invention can be made by a simpler making process.

It can be confirmed that the gas diffusion electrode according to the present invention shows the effect by smaller amount of humidification in either the case that the electrode is placed at the anode or the cathode alone. However, it shows the greatest effect by the smaller amount of humidification when the gas diffusion electrodes according to the present invention are placed at both electrodes.

As described above, in a polymer electrolyte fuel cell, in which it is important to keep the electrolyte at a suitable wet condition, the present invention provides a gas diffusion electrode to exhibit a high output voltage even under a condition of small amount of humidification from outside.

Hereinafter, Examples of the present invention will be described.

### Example 1

With an acetylene black powder (product of Denki Kagaku Kogyou Kabushiki Kaisha: Denka Black), 30 wt%, in dry weight, of an aqueous dispersion of PTFE (product of Daikin Industries, Ltd.: D-1) was mixed to formulate a water repellent layer ink. The mixture here was carried out by using a colloid mill to disperse for 30 minutes, thereby to impose shear force thereon. This water repellent layer ink was coated on one surface of a carbon paper (product of Toray Industries, Inc.: TGPH060H), and was subjected to heat treatment at 280 °C for 20 minutes, thereby to make a gas diffusion layer.

Meanwhile, catalyst layers were formed on both surfaces of a polymer electrolyte membrane (product of DuPont Company: Nafion112 membrane). The catalyst layer is the one made by forming a mixture of 96 weight parts of an electrically conductive fine carbon powder (product of Lion Corporation: Ketjenblack EC) carrying a platinum catalyst in a 1:1 weight ratio and of 4 weight parts of a polymer electrolyte the same as above described polymer electrolyte membrane. The gas diffusion layer was overlaid on and in contact with the catalyst layer of the polymer electrolyte membrane, and they were bonded by thermal fusion at 160 °C, thereby to make an electrolyte membrane-electrode assembly (MEA). By using this MEA, unit cell I of hydrogen-air type fuel cell was made.

### Comparative Example 1

A gas diffusion layer was made in a manner similar to that in Example 1, except that here an aqueous dispersion of copolymer of tetrafluoroethylene-hexafluoropropylene (product of Daikin Industries, Ltd.: ND-1) was used, for making a water repellent layer ink, in place of the aqueous dispersion of PTFE. By using this gas diffusion layer, an MEA was made in a manner similar to that in Example 1. It was found that in this MEA, an exfoliation occurred between the gas diffusion layer and the catalyst layer. By using this MEA, unit cell II similar to the one in Example 1 was assembled.

### Comparative Example 2

A gas diffusion layer was made in a manner similar to that in Example 1, except that here the temperature of the heat treatment, after the coating of the water repellent layer ink on one surface of the carbon paper, was changed to 350°C. By using this gas diffusion layer, an MEA was made in a manner similar to that in Example 1. It was found that in this MEA, an exfoliation occurred between the gas diffusion layer and the catalyst layer. By using the MEA, unit cell III similar to the one in Example 1 was assembled.

### Example 2

By using the MEA of Example 1, a liquid fuel cell was made.

### Comparative Example 3

By using the MEA of Comparative Example 1, a liquid fuel cell was made.

### Comparative Example 4

By using the MEA of Comparative Example 2, a liquid fuel cell was made.

The fuel cells according to the above Example 1 and Comparative Examples 1 and 2 were subjected to cell discharge tests by: supplying, to the respective anodes thereof, a pure hydrogen gas humidified to have a dew point of 70°C; supplying, to the respective cathodes thereof, air humidified to have a dew point of 50°C; and setting the cell temperature at 75°C, the fuel gas utilization rate at 70% and the air utilization rate at 40%.

Further, the fuel cells according to Example 2 of the present invention and Comparative Examples 3 and 4, i.e. unit cells as direct type methanol fuel cells, were subjected to cell discharge tests by: supplying, to the respective anodes thereof, an aqueous solution of 2 mol/l methanol at a temperature of 60°C as a representative example of liquid fuel; supplying, to the respective cathodes thereof, air humidified to have a dew point of 60°C; and setting the conditions of temperature at 75°C and air utilization rate at 40%.

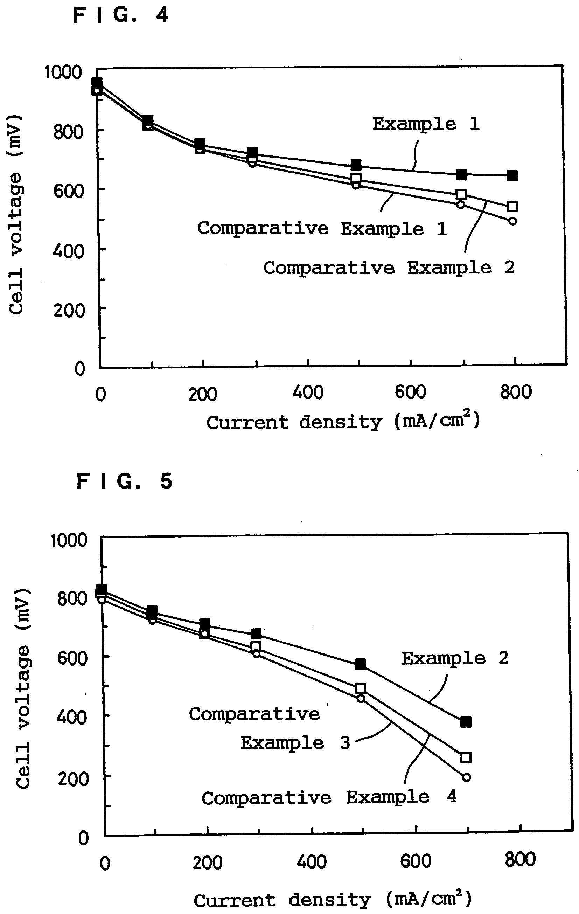

FIG. 4 shows average values of discharge characteristics of the unit cells I, II and III according to Example 1 and Comparative Examples 1 and 2 as hydrogen-air fuel cells. Noting the cell voltages at a current density of 800 mA/cm², the voltages of unit cells I, II and III were 635 mV, 481 mV and 529 mV, respectively in this order. As evident from FIG. 4, the higher the current densities become, the more the discharge voltages differ. As the current density increases, water generated from a cell proportionally increases, so that delicate intimacy of the electrode contact has influences thereon. Portions of the electrode, which have degraded bonding strengths, have lowered water repellent effects. Accordingly, water locally stays at such portions, resulting in a degraded gas diffusion capability. The thus influenced portions of the electrode cause degraded power generation, resulting in lower discharge performance thereof. On the other hand, tight bonding of the electrode can be realized by the fibrillation of the water repellent material, so that high water repellent effect can be maintained for a long period. Thus, the fuel cell according to the present invention has brought about a consequence of high durability.

FIG. 5 shows average values of discharge characteristics of the unit cells X according to Example 2 of the present invention and unit cells Y and Z according to Comparative Examples 3 and 4 as liquid fuel cells. Noting the unit cell voltages at a current density of 300 mA/cm², the voltages of unit cells X, Y and Z were 666 mV, 601 mV and 620 mV, respectively.

Further, presence or absence of exfoliations of electrodes made in the Example according to the present invention and those in the Comparative Examples was confirmed. As a result, out of 50 cells made according to Example 1, none of the 50 cells had electrode exfoliations generated therein. On the contrary, out of 50 cells according to each of Comparative Examples 1 and 2, 40 cells of Comparative Example 1 and 50 cells of Comparative Example 2 had electrode exfoliations generated therein. One factor to have caused such electrode exfoliations is a degraded bonding strength, because fibrillated portions of the water repellent material were subjected to heat treatment at a temperature of the melting point or above thereof, so that they got softened and re-agglomerated, and the fibrillated portions decreased. Another factor to have caused the electrode exfoliations is the inherent low molecular weight of the water repellent material, which prevented fibrillation thereof and caused degraded bonding strength, so that the electrode could not withstand the shape change by expansion and shrinkage due to water content change in the membrane.

With respect to the voltage variations of unit cells I, II and II according to Example 1 and Comparative Examples 2 and 3 at a current density of 200 mA/cm², that of unit cell I in terms of standard deviation was 2.08, whereas those of unit cells II and III were 4.22 and 5.17, respectively, which indicate variations twice or more as much. A factor of this variation was attributed to variations of bonding at the membrane-electrode assemblies. Due to variations of the bonding strengths of the water repellent layers of unit cells, local spaces were generated where water repellency degraded and thus water could stay, whereby consequently the fuel cells showed the variations of discharge performances. In the case of fuel cells, plural unit cells are usually connected in series or parallel in actual use. Therefore, the variations of performances of unit cells much influence on performances of fuel cell stacks. In the case of the series connection, in particular, the limit current value of a unit cell having lowest characteristics in a fuel cell stack becomes the limit current value of the whole fuel cell stack, so that the unit cell having the lowest performance defines the limit value of performance of the whole fuel cell stack. In other words, it is a further coming important problem to reduce the variations of performances among unit cells. Thus, the electrode for a fuel cell according to the present invention enables dense bonding by the fibrillation of water repellent materials, hence reduces the variations of discharge performances of unit cells, and consequently improves the discharge performances of fuel cell stacks.

Furthermore, because of the fibrillation of the water repellent materials, electrode exfoliations are not generated any longer, so that it becomes possible to shorten the time for making stacks in a stack assembly process, thereby to be able to reduce manufacturing cost. Besides, although hydrogen and methanol were used in the above Example as an example of a fuel, similar results can be obtained even by a fuel, in which hydrogen is substituted with a reformed hydrogen containing impurities such as carbon dioxide, nitrogen and carbon monoxide. Also it is needless to mention that similar results can be obtained even by a liquid fuel such as ethanol, dimethyl ether and a mixture thereof in place of methanol. Further, the liquid fuels can be supplied by being preliminarily evaporated.

The structure of the gas diffusion layer is not limited to such fine carbon powder or carbon paper as shown in the Example, but effective results can also be obtained by using other carbon black or carbon cloth.

### Example 3

First of all, a method of making a catalyst layer will be described. A carbon powder having a particle size of a few micrometers was immersed in an aqueous solution of chloroplatinic acid and was subjected to a reduction treatment, thereby to allow the carbon powder to carry platinum catalyst on the surface thereof. The weight ratio of the carbon and the carried platinum was 1:1. Next, the carbon powder carrying the platinum was dispersed in an alcohol solution of a polymer electrolyte, thereby to obtain a slurry.

The slurry containing the carbon powder carrying the catalyst was coated on a film base material, and was dried to form a catalyst layer. The catalyst layer was transferred onto a polymer electrolyte membrane, thereby to make a polymer electrolyte membrane with catalyst layers. The catalyst layers were designed to have a size smaller than a carbon paper to be joined thereto later in such manner as for the outer periphery of the carbon paper to extend out of that of the catalyst layer by a few millimeters.

Next, a water repellent carbon layer will be described. A granulated powder of acetylene black was dispersed in water containing an additive of a surfactant, and then an aqueous dispersion of polytetrafluoro-ethylene was added thereto, and the mixture was well mixed by a colloid mill, thereby to formulate a slurry of water repellent carbon.

In this water repellent carbon slurry, a carbon paper having a thickness of 360 *µ*m was immersed, and a container, as a whole, was kept under a reduced pressure so as to impregnate the water repellent carbon slurry into substantially whole region of the carbon paper. It was then pulled out and dried, and was thereafter subjected to heat treatment at 280°C for 20 minutes.

The carbon paper thus having the water repellent carbon impregnated therein was cut to a given size. Such carbon papers were overlaid on both surfaces of above described polymer electrolyte membrane with catalyst layers so as to cover whole of the catalyst layers. Then gaskets were aligned with peripheral portions of the carbon paper, and pressed at 100°C for 5 minutes, thereby to make an MEA.

Polymer electrolyte fuel cell A having been thus made as above was subjected to an aging operation for 12 hours, and was evaluated as to its current-voltage characteristics under two conditions with different dew points at the cathode side. To the anode, hydrogen humidified to have a dew point of 70°C was supplied at a flow rate to be a utilization rate of 70%, while humidified air was supplied to the cathode at a flow rate to be a utilization rate of 40%.

Firstly, the current-voltage characteristics were measured under the condition that the dew point (Tdc) of the air supplied to the cathode was 60°C. Thereafter, the dew point of the air to be supplied to the cathode was changed to 45°C, and was subjected to an aging operation for 8 hours, and then the current-voltage characteristics were measured again to get current-voltage characteristics under the dew point 45°C of the air. The cell temperature was kept at 75°C.

### Comparative Example 5

A fuel cell B, i.e. conventional cell B, was made in a manner similar to that in Example 3 by using a gas diffusion electrode, wherein a water repellent carbon layer was coated by blade coating on and to be localized at a surface of a porous electrode base material, which surface is to get in contact with a catalyst layer.

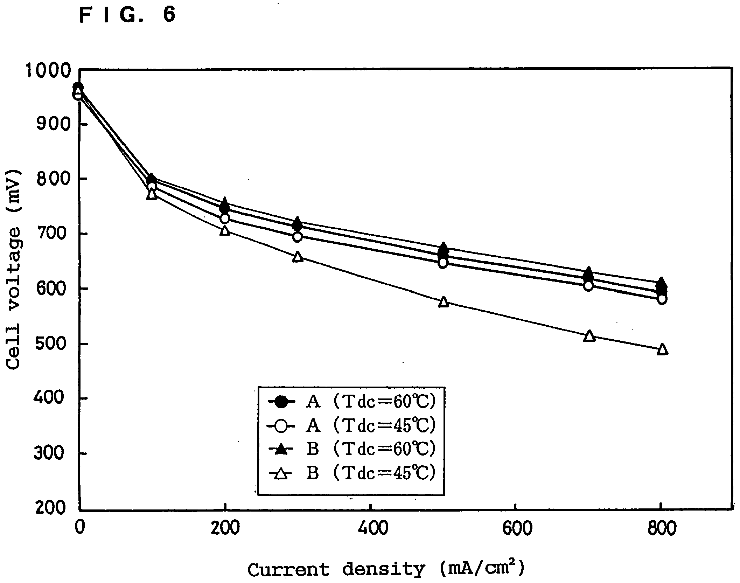

The current-voltage characteristics of fuel cell A according to Example 3 and fuel cell B according to Comparative Example 5 are shown in FIG. 6. From the results thereof, it can be recognized that the polymer electrolyte fuel cell using the gas diffusion electrode according to the present invention can show a high output voltage even under a condition of small amount humidification.

### Example 4

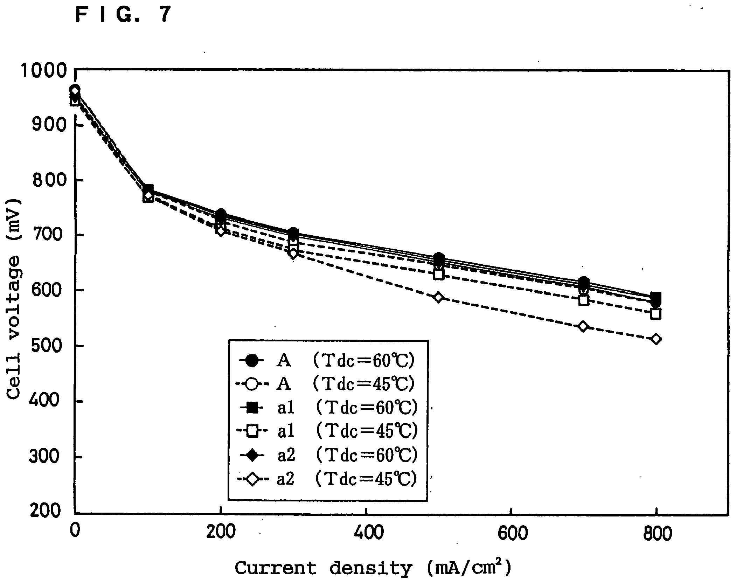

FIG. 7 shows the characteristics of cells a1 and a2 having a gas diffusion electrode of Example 3 placed only for the anode and placed only for the cathode, respectively, in comparison with cell A having such gas diffusion electrodes placed for both electrodes. From the results thereof, it can be recognized that in both the cases of placing the gas diffusion electrode according to the present invention only at the anode and the case of placing the same only at the cathode, the output voltage under a condition of small amount humidification can be improved. Further, the greatest effect by small amount humidification can be obtained in the case when the gas diffusion electrodes according to the present invention are placed at both the anode and the cathode.

### Comparative Example 6

A gas diffusion electrode according to the present invention was compared with a gas diffusion electrode which had an electrically conductive and water repellent layer coated thereon after the electrode base material was preliminarily subjected to water repellency treatment.

A method of making a fuel cell, as a comparative example, will be described.

A carbon paper, to be an electrode base material, having a thickness of 360 *µ*m was immersed in an aqueous dispersion of fluorocarbon resin, and was then dried. On one main surface of the porous electrode base material having thus been provided with water repellency, a slurry of water repellent carbon as used in Example 3 was coated, and was subjected to heat treatment at 280°C for 20 minutes. Next, two sheets of above described carbon paper each having been subjected to the water repellency treatment and coated with the water repellent carbon layer and having been cut to have a give size were overlaid on both surfaces of a polymer electrolyte membrane with catalyst reactive layers so as to cover whole of the catalyst layers thereby; and then gaskets were aligned with peripheral portions thereof, and pressed at 100°C for 5 minutes, thereby to make an MEA in a manner similar to that in Example 3.

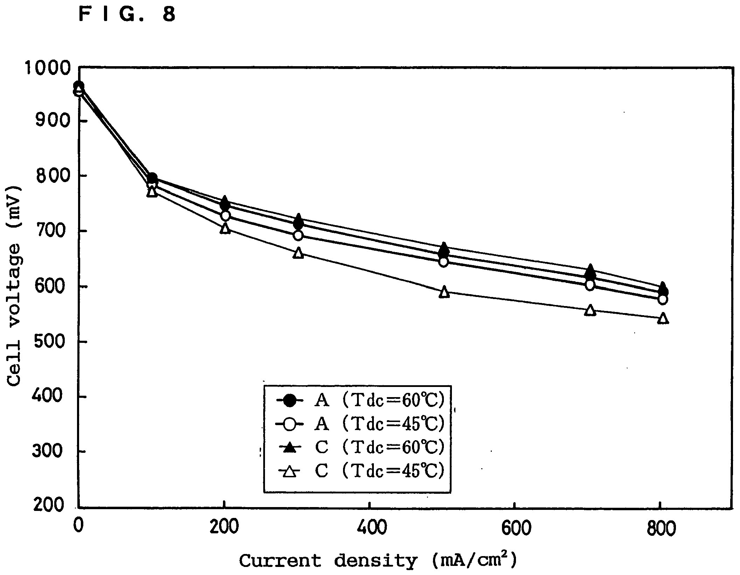

FIG. 8 shows the characteristics of cell C using this MEA under the conditions similar to those in Example 3. From the results thereof, it can be recognized that comparing polymer electrolyte fuel cell A using the gas diffusion electrode according to the present invention with polymer electrolyte fuel cell C using the gas diffusion electrode having an electrically conductive and water repellent layer coated thereon after the electrode base material thereof is preliminarily subjected to water repellency treatment, the former has a higher output voltage under the condition of small amount humidification. In other words, in a cell using the gas diffusion electrode according to the present invention, degradation of its performance by a decrease of the mount of humidification can be better suppressed.

### Industrial Applicability

As described above, according to the present invention, it is possible to uniformly supply reactive gases to the catalyst of the catalyst layers, and to immediately exhaust generated water and generated carbon dioxide. It is also possible to reduce man-hours in the manufacturing process, and to provide a polymer electrolyte fuel cell and an electrode for a liquid fuel cell that are inexpensive and have high discharge performances and high durabilities.

Further, by distributing electrically conductive and water repellent particles throughout the gas diffusion layer, gas diffusion electrodes having superior performances of keeping polymer electrolytes at wet conditions can be obtained. By using such gas diffusion electrodes, it becomes possible to provide a polymer electrolyte fuel cell in which output degradation under a condition of small amount humidification is suppressed.

## Claims

1. A method of making an electrode for a fuel cell, comprising a gas diffusion layer and a catalyst layer formed on a surface thereof to face a polymer electrolyte membrane, said method, to form the gas diffusion layer, comprising the steps of:
providing a porous electrode base material made of a carbon material selected from carbon paper, carbon felt and carbon cloth,
providing a water repellent layer ink comprising carbon black and a fibrillatable water repellant polymer in form of polytetrafluoroethylene having a molecular weight higher than 1 million,
promoting the fibrillation of the polymer by stirring the ink to impose a shear force on the water repellent material,
applying, to a surface of the base material to contact the catalyst layer, the water repellent layer ink with the so fibrillation-promoted polymer,
subjecting the base material with the applied water repellent layer ink to a heat treatment at a temperature which is equal to or higher than 270° C and equal to or below the melting point of said water repellent polymer, but is 330°C at most.

2. A method of making an electrode for a fuel cell, comprising a gas diffusion layer and a catalyst layer formed on a surface thereof to face a polymer electrolyte membrane, said method, to form the gas diffusion layer, comprising the steps of:
providing a porous electrode base material made of a carbon material selected from carbon paper, carbon felt and carbon cloth,
providing a water repellent carbon slurry comprising carbon black and a fibrillatable water repellent polymer in form of polytetrafluoroethylene having a molecular weight higher than 1 million,
promoting the fibrillation of the polymer by stirring the slurry to impose a shear force on the water repellent material,
applying, to the base material, the water repellent material with the so fibrillation-promoted polymer by immersing the base material in the slurry for its impregnation therewith,
subjecting the base material with the applied water repellent material to a heat treatment at a temperature which is equal to or higher than 270°C and equal to or below the melting point of said water repellent polymer, but is 330°C at most.

3. Method of claim 2, wherein the particles having water repellency are distributed substantially throughout the whole region of the gas diffusion layer.

4. Method of any of claims 1 to 3, wherein portions are generated where the polymer is fibrillated in a web form.

## Patentansprüche

1. Verfahren zur Herstellung einer Elektrode für eine Brennstoffzelle, die Elektrode umfassend eine Gasdiffusionsschicht und eine Katalysatorschicht, die auf einer Oberfläche der ersteren gebildet wird, um einer Polymer-Elektrolyt-Membran gegenüber zu liegen, wobei das Verfahren zur Bildung der Gasdiffusionsschicht die folgenden Schritte umfasst:
Bereitstellen eines porösen Basismaterials für die Elektrode, wobei das Basismaterial aus den folgenden Kohlenstoff-basierten Materialien ausgewählt wird: Kohlenstoffpapier, Kohlenstofffilz und Kohlenstoffinatte,
Bereitstellen einer Tinte zur Bildung einer wasserabweisenden Schicht, umfassend Industrieruß und ein fibrillierfähiges wasserabweisendes Polymer in Form von Polytetrafluorethylen mit einem Molekulargewicht, das höher als 1 Million ist,
Vorantreiben der Fibrillierung des Polymers durch Rühren der Tinte, um eine Scherkraft auf das wasserabweisende Material auszuüben,
Aufbringen, auf eine Oberfläche des Basismaterials, die für einen Kontakt mit der Katalysatorschicht bestimmt ist, der Tinte zur Bildung einer wasserabweisenden Schicht, die das Polymer enthält, bei dem die Fibrillierung durchgeführt wurde,
Unterziehen des Basismaterials mit der aufgebrachten Tinte zur Bildung einer wasserabweisenden Schicht einer Wärmebehandlung bei einer Temperatur, die gleich oder höher als 270 °C ist und gleich oder niedriger als der Schmelzpunkt des wasserabweisenden Polymers, aber höchstens 330 °C beträgt.

2. Verfahren zur Herstellung einer Elektrode für eine Brennstoffzelle, die Elektrode umfassend eine Gasdiffusionsschicht und eine Katalysatorschicht, die auf einer Oberfläche der ersteren gebildet wird, um einer Polymer-Elektrolyt-Membran gegenüber zu liegen, wobei das Verfahren zur Bildung der Gasdiffusionsschicht die folgenden Schritte umfasst:
Bereitstellen eines porösen Basismaterials für eine Elektrode, wobei das Basismaterial aus den folgenden Kohlenstoff-basierten Materialien ausgewählt wird: Kohlenstoffpapier, Kohlenstofffilz und Kohlenstoffmatte,
Bereitstellen einer wasserabweisenden Kohlenstoffaufschlämmung umfassend Industrieruß und ein fibrillierfähiges wasserabweisendes Polymer in Form von Polytetrafluorethylen mit einem Molekulargewicht, das höher als 1 Million ist,
Vorantreiben der Fibrillierung des Polymers durch Rühren der Aufschlämmung, um eine Scherkraft auf das wasserabweisende Material auszuüben,
Aufbringen, auf das Basismaterial, des wasserabweisenden Materials mit dem Polymer, bei dem die Fibrillierung durchgeführt wurde, durch Eintauchen des Basismaterials in die Aufschlämmung für seine Imprägnierung damit,
Unterziehen des Basismaterials mit dem aufgebrachten wasserabweisenden Material einer Wärmebehandlung bei einer Temperatur, die gleich oder höher als 270 °C ist und gleich oder niedriger als der Schmelzpunkt des wasserabweisenden Polymers, aber höchstens 330 °C beträgt.

3. Verfahren gemäß Anspruch 2, wobei die Partikel mit wasserabweisenden Eigenschaften im Wesentlichen über den gesamten Bereich der Gasdiffusionsschicht verteilt werden.

4. Verfahren gemäß einem der Ansprüche 1 bis 3, wobei Abschnitte erzeugt werden, bei denen das Polymer in einer Bahnform fibriliert wird.

## Revendications

1. Procédé de réalisation d'une électrode pour pile à combustible comprenant une couche de diffusion gazeuse et une couche de catalyseur formée sur une surface de cette dernière pour être tournée vers une membrane électrolytique polymère, ledit procédé, pour former la couche de diffusion gazeuse, comprenant les étapes consistant à :
disposer d'un matériau de base poreux pour l'électrode, composé d'un matériau carboné choisi parmi le papier de carbone, le feutre de carbone et le tissu de carbone,
disposer d'une encre pour couche hydrofuge comprenant du noir de carbone et un polymère hydrofuge susceptible d'être fibrillé sous la forme de polytétrafluoroéthylène de poids moléculaire supérieur à 1 million,
promouvoir la fibrillation du polymère en agitant l'encre afin d'exercer une force de cisaillement sur le matériau hydrofuge,
appliquer, sur une surface du matériau de base destinée à toucher la couche de catalyseur, l'encre pour couche hydrofuge comportant le polymère ayant subi ladite fibrillation,
soumettre le matériau de base comportant l'application d'encre pour couche hydrofuge à un traitement thermique à une température égale ou supérieure à 270 °C et égale ou inférieure au point de fusion dudit polymère hydrofuge, sans toutefois dépasser 330 °C.

2. Procédé de réalisation d'une électrode pour pile à combustible, comprenant une couche de diffusion gazeuse et une couche de catalyseur formée sur une surface de cette dernière pour être tournée vers une membrane électrolytique polymère, ledit procédé, pour former la couche de diffusion gazeuse, comprenant les étapes consistant à :
disposer d'un matériau de base poreux pour l'électrode, composé d'un matériau carboné choisi parmi le papier de carbone, le feutre de carbone et le tissu de carbone,
disposer d'une suspension épaisse de carbone hydrofuge comprenant du noir de carbone et un polymère hydrofuge susceptible d'être fibrillé sous la forme de polytétrafluoroéthylène de poids moléculaire supérieur à 1 million,
promouvoir la fibrillation du polymère en agitant la suspension épaisse afin d'exercer une force de cisaillement sur le matériau hydrofuge,
appliquer, sur le matériau de base, le matériau hydrofuge comportant le polymère ayant subi ladite fibrillation en immergeant le matériau de base dans la suspension épaisse afin de l'en imprégner,
soumettre le matériau de base comportant l'application de matériau hydrofuge à un traitement thermique à une température égale ou supérieure à 270 °C et égale ou inférieure au point de fusion dudit polymère hydrofuge, sans toutefois dépasser 330 °C.

3. Procédé selon la revendication 2, dans lequel les particules de nature hydrofuge sont réparties sensiblement sur la totalité de la couche de diffusion gazeuse.

4. Procédé selon l'une quelconque des revendications 1 à 3, dans lequel sont produites des sections dans lesquelles le polymère est fibrillé sous la forme d'une toile.
